# EUROPÄISCHE PATENTSCHRIFT

(11) **EP 2 617 627 B1**
(45) Veröffentlichungstag und Bekanntmachung des Hinweises auf die Patenterteilung: **19.10.2016**
(21) Anmeldenummer: 12194747.7
(22) Anmeldetag: 29.11.2012
(51) Int. Cl.: B62D 15/02, G05D 1/00, B60T 7/22, B60T 7/16

(54) **Fernsteuerung von Parkier- und Rangiermanövern von Kraftfahrzeugen**
Remote control for parking and slow manoeuvers of motor vehicles
Commande à distance pour manoeuvres de stationnement de véhicules automobiles

(30) Priorität: 19.01.2012 DE 102012200725
(43) Veröffentlichungstag der Anmeldung: 24.07.2013
(73) Patentinhaber: ROBERT BOSCH GMBH, 70442 Stuttgart (DE)
(72) Erfinder: Fausten, Michael, 71679 Asperg (DE); Knoop, Michael, 71638 Ludwigsburg (DE); Flehmig, Folko, 70192 Stuttgart (DE)

(56) Entgegenhaltungen:
- EP-A1- 2 135 788
- EP-A1- 2 295 281
- JP-A- 2002 054 320
- JP-A- 2006 333 834
- JP-A- 2008 123 028
- US-A1- 2007 198 190
- US-A1- 2008 117 079

## Beschreibung

### Stand der Technik

Die vorliegende Erfindung betrifft ein System zur Fernsteuerung bzw. zum Fernsteuern eines Fahrzeugs sowie ein Verfahren zur Absicherung eines Fernsteuervorgangs eines Fahrzeugs. Des Weiteren betrifft die vorliegende Erfindung ein Fahrzeug sowie eine Fernsteuerung, welches bzw. welche eingerichtet ist bzw. sind, in einem erfindungsgemäßen System verwendet zu werden.

Systeme zur Fernsteuerung von Kraftfahrzeugen (z.B. PKW) sind im Stand der Technik aus mehreren Patentanmeldungen bekannt. Hierbei handelt es sich insbesondere um Systeme, mit welchen ein Anwender, welcher sicher außerhalb eines Kraftfahrzeugs befindet, mittels einer Fernbedienungseinrichtung Fahrmanöver veranlassen und durchführen kann. Insbesondere zum Rangieren in Situationen, welche aus dem Fahrzeug heraus nur eine begrenzte Übersicht gewährleisten, kann der Fahrer des Fahrzeugs sich in eine Position außerhalb des Fahrzeugs begeben, aus welcher beispielsweise Engstellen zwischen seinem Fahrzeug und dessen Umgebung einfacher einzuschätzen und entsprechende Lenk- bzw. Steuermanöver für das Fahrzeug sicherer vorzunehmen sind. Zudem bietet sich die Möglichkeit, Fahrzeuge so dicht nebeneinander zu parken, dass ein Aussteigen nach Erreichen der Parkposition nicht mehr möglich wäre. Dies spart Platz und erleichtert insbesondere alten Menschen Parkvorgänge und Rangierfahrten.

EP 2 295 281 A1 offenbart eine Fahrerassistenzeinrichtung für ein Kraftfahrzeug, welche ein autonom parkfähiges Kraftfahrzeug und eine Fernbedienung mit einer Anzeigeeinrichtung umfasst. Um nur solche Bilddaten von fahrzeugbasierten Kameras an die Fernbedienung zu senden, welche für den Anwender der Fernbedienung wertvoll sind, erkennt eine Steuereinrichtung, dass sich die Fernbedienung und somit auch der Fahrer seitlich des Personenwagens befinden.

Die US 2008/0117079 A1 offenbart ein gattungsgemäßes System zur Fernsteuerung eines Fahrzeugs und zeigt den Oberbegriff des unabhängigen Anspruchs.

Im Praxis- bzw. Serieneinsatz befinden sich derartige Systeme derzeit noch nicht. Dies ist u.a. darauf zurückzuführen, dass einige Sicherheitsaspekte einer Fernsteuerung von Kraftfahrzeugen für den Serieneinsatz bislang noch nicht zufriedenstellend gelöst sind. Auch einer amtlichen Zulassung eines solchen Systems stehen erhebliche Bedenken entgegen. Beispiele hierfür sind mangelnde Bedienergonomie,

Plausibilisierung von Bedienschritten zur Vermeidung von Schadensfällen und Verhinderung von Missbrauchsfällen. Die vorgenannten Problempunkte lassen sich als zulassungsrelevante Aspekte der Bediensicherheit eines gattungsgemäßen Systems auffassen.

### Offenbarung der Erfindung

Die vorstehend genannten Probleme des Standes der Technik werden erfindungsgemäß durch ein System zum Fernsteuern eines Fahrzeugs mit den Merkmalen gemäß Anspruch 1 sowie ein Verfahren zur Absicherung eines Fernsteuervorgangs eines Fahrzeugs mit den Merkmalen nach Anspruch 2 gelöst. Ein erfindungsgemäßes System umfasst hierbei ein Fahrzeug und eine Fernsteuerung, wobei das Fahrzeug und die Fernsteuerung jeweils eine Sende-/Empfangseinrichtung umfassen. Diese sind eingerichtet, miteinander Signale auszutauschen, um einem Anwender außerhalb eines Fahrzeugs mittels der Fernsteuerung ein Einleiten von Fahrmanövern seines Fahrzeugs zu ermöglichen. Erfindungsgemäß ist das System dabei eingerichtet zu überprüfen, ob eine aktuelle Position des Fahrzeugs in einem vordefinierten Aufenthaltsbereich für das Fahrzeug liegt. Im Ansprechen auf das Ergebnis kann eine erfindungsgemäße Fernsteuerung des Fahrzeugs ermöglicht und/oder unterbunden werden. Beispielsweise kann als vordefinierter Aufenthaltsbereich für das Fahrzeug ein bestimmter oder jeder Parkplatz bzw. -bereich festgelegt werden, in welchem ein externes Rangieren eines Fahrzeugs mittels einer Fernsteuerung wenig Gefahr für Passanten und andere Verkehrsteilnehmer sowie Umgebungsobjekte des Fahrzeugs birgt. Andere Beispiele sind die heimische Tiefgarage oder ein Privatgrundstück, auf welchem ein Anwender sein Fahrzeug üblicherweise parkt und welche er in das System einpflegen kann. Im Umkehrschluss können auch Verbotszonen definiert werden, in welchen unter keinen Umständen eine Fernbedienung des Fahrzeugs erfolgen darf (z.B. Kraftfahrtstraßen, Autobahnen). Der vorstehend erläuterte Funktionsumfang bietet den Vorteil, dass ein Missbrauchsfall grundsätzlich an weniger Orten und somit deutlich unwahrscheinlicher eintreten kann wodurch die Gefahr für Personen und Gegenstände im Umfeld des ferngesteuerten Fahrzeugs geringer ausfällt.

Alternativ oder zusätzlich können Sitzbelegungsinformationen des Fahrzeugs überprüft werden, im Ansprechen worauf eine Fernsteuerung des Fahrzeugs ermöglicht und/oder unterbunden wird. Beispielsweise kann eine Fernsteuerung des Fahrzeugs erst dann ermöglicht werden, wenn das Fahrzeug keine Insassen beinhaltet. Hierdurch kann einerseits sichergestellt werden, dass im Falle eines Unfalls mit dem ferngesteuerten Fahrzeug keine Insassen zu Schaden kommen können, andererseits kann ein Eingreifen weiterer Personen (nämlich der Insassen) in den Rangiervorgang von vornherein ausgeschlossen und somit die Verantwortung für den Rangiervorgang vollständig in den Bereich des fernsteuernden Anwenders/Fahrers gelegt werden. Insbesondere dieser Aspekt kann für die Zulassung eines erfindungsgemäßen Systems erhebliche rechtliche Relevanz besitzen.

Alternativ oder zusätzlich können Beschleunigungssensoren und/oder Lagesensoren in der Fernsteuerung des Systems vorgesehen und ausgewertet werden, um Fahrzeugbewegungen herbeizuführen, welche mit den von dem Beschleunigungs- bzw. Lagesensoren stammenden Signalen verknüpft worden sind. Eine Bedienung über Beschleunigungs- bzw. Lagesensoren, beispielsweise eines Smartphones, hat mehrere vorteilhafte Aspekte. Einerseits ist eine nahezu stufenlose Quantifizierung der Steuersignale (z.B. Lenkeinschlag, Gas und Bremse, Hupe, Licht) mit geringem technischem Aufwand und ohne mechanische Fehlerquellen realisierbar. Andererseits können die Bedienergonomie und Akzeptanz durch den Anwender dadurch erhöht werden, so dass mehrere Dimensionen (Vorwärts- bzw. Rückwärtsbewegung und zusätzlich Lenkeinschlag) intuitiv mit lediglich einem Handhabungselement (Smartphone-Korpus) vorgenommen werden können.

Alternativ oder zusätzlich können Bildsignale vom Fahrzeug an die Fernsteuerungseinrichtung gesendet und dem Anwender beispielsweise in einer Vogelperspektive ("Bird-View") dargestellt werden. Durch Bedienschritte an der Fernsteuerungseinrichtung kann der Anwender nun beispielsweise eine Engstelle des Fahrzeugs vergrößert darstellen und somit besser begutachten. Dies ermöglicht es, Fahrmanöver sicherer und gezielter vorzunehmen. Erfindungsgemäß kann weiter vorgesehen sein, dass in den Kameradaten (oder Daten anderer Sensoren bis hin zu satellitenbasierten Informationen) Objektgrenzen hervorgehoben werden, indem Objektgrenzinformationen (z.B. einhüllende Linien, welche das Objekt zumindest teilweise umgeben) zur Kollisionsüberwachung erstellt werden. Während nämlich eine tatsächliche Objektgrenze (z.B. eines Busches oder eines geparkten Fahrrades) vergleichsweise kompliziert, diffus oder gar beweglich sind, müssen kollisionsrelevante Informationen eindeutig und einfach gestaltet sein, um die zugrunde liegende Kollisionsüberwachung schnell und effektiv durchführen zu können. Dies kann beispielsweise durch Auswertung der graphischen Darstellung seitens des Prozessors des Smartphones, aber auch durch ein entsprechendes Steuergerät des Fahrzeugs durchgeführt werden. Software zur Erkennung von Objektgrenzen, insbesondere durch Überprüfung von Bildparametern wie Kontrast ("Ränder finden"), sind im Stand der Technik gut bekannt und sicher beherrschbar. Im Ansprechen auf dargestellte Objektgrenzinformationen kann der Anwender die gefundenen bzw. hervorgehobenen Objektgrenzinformationen entweder bestätigen oder anpassen. Ist beispielsweise eine Objektgrenzinformation zu optimistisch durch das Smartphone ermittelt worden, oder Anbauteile nicht erkannt worden, kann der Anwender die Objektgrenzinformation seines Fahrzeugs oder eines Umgebungsobjektes mittels einer Geste in Richtung des möglichen Kollisionsobjektes verschieben. Ist die Objektgrenzinformation zu pessimistisch festgelegt worden, also ein zu großer Sicherheitsabstand um das Fahrzeug vorgesehen worden, kann der Anwender den Sicherheitsabstand durch eine entsprechende Eingabe verringern und anschließend bestätigen. Die auf diese Weise festgelegten Objektgrenzinformationen können mit den dargestellten Objekten verankert werden und nun anhand der Objektgrenzinformationen Kollisionswarnungen und Vermeidungsalgorithmen beim Rangiervorgang vorgenommen werden. Insbesondere für den vorstehend genannten Aspekt der vorliegenden Erfindung bietet sich als Fernsteuerungseinrichtung ein Gerät mit berührungssensitiver Oberfläche auf der Anzeigeeinrichtung an. Insbesondere kommt als Fernsteuerungseinrichtung ein Mobiltelefon (z.B. Smartphone) oder ein persönlicher digitaler Assistent (PDA) infrage. Diese Geräte können via Kurzstreckenverbindung (z.B. Infrarot, Bluetooth, WLAN) oder über eine Netzbetreibergestützte Datenverbindung (GSM, UMTS, LTE, LTE-A oder digitale Satellitentelefonie) mit dem Fahrzeug Daten austauschen.

Alternativ oder zusätzlich kann das System eingerichtet sein, eine Informationseinheit bezüglich kollisionsrelevanter Strukturen einer Fahrzeugumgebung zu empfangen. Beispielsweise kann bei der Einfahrt in ein Parkhaus eine Infrastruktureinrichtung (umfassend eine Sende-Empfangseinheit) des Parkhauses eine Dateneinheit an das Fahrzeug und/oder dessen Fernbedienung senden, welche bei der Navigation innerhalb des Parkhauses berücksichtigt werden kann. Eine solche Informationseinheit kann im Wesentlichen ähnliche Informationen enthalten, wie sie ein Bauplan bzw. ein Grundriss des Gebäudes bzw. des Areals beinhaltet. Indem das Fahrzeug die eigenen Abmaße während eines Rangiervorgangs mit der empfangenen Informationseinheit korreliert, kann eine gegebene Trajektorie hinsichtlich ihrer Erfolgsaussichten für ein kollisionsfreies Erreichen einer Zielposition vorgenommen werden. Eine solche, durch eine individuelle Parkeinrichtung wie beispielsweise ein Parkhaus, übermittelte Informationseinheit, kann eine vielfach exaktere Plausibilisierung von Rangiervorgängen ermöglichen, als sie beispielsweise durch ein herkömmliches Kartenmaterial eines Navigationssystems möglich ist. Dies bietet den Vorteil, dass das Fahrzeug bei der Kollisionsüberprüfung nicht allein auf die eigene Umgebungssensorik angewiesen ist, sondern z.B. markante Punkte in seinem Umfeld mit dem in der Informationseinheit enthaltenen Abbild seiner Umgebung abgleichen und sich somit sehr genau relativ zu seinem Umfeld lokalisieren kann.

Alternativ oder zusätzlich kann das System eingerichtet sein, das Fahrzeug nach dem Zurücklegen einer vordefinierten Weglänge während eines Fernsteuervorgangs automatisch zu stoppen. Da für einen Rangiervorgang im Rahmen des Anfahrens einer Ziel-Parkposition im Allgemeinen lediglich wenige Meter durch das Fahrzeug zurückzulegen sind, kann somit das Ausmaß eines möglichen Missbrauchs deutlich verringert werden. Beispielsweise kann ein Anwender nach Erreichen einer maximal erlaubten vordefinierten Weglänge, welche das Fahrzeug ferngesteuert zurückgelegt hat, aufgefordert werden, in das Fahrzeug einzusteigen und die Fahrt durch die in das Fahrzeug integrierten Bedienelemente fortzusetzen.

Erfindungsgemäß wird das Fahrzeug einen Hinweis an die Fernsteuerung senden, wenn das Fahrzeug die vordefinierte Weglänge zurückgelegt hat. Es versteht sich von selbst, dass auch beim Verbleiben gewisser vordefinierter, ferngesteuert zurücklegbarer Weglängen entsprechende Hinweise an die Fernsteuerung gesendet und dem Anwender dargestellt werden können. Dies bietet den Vorteil, dass der Anwender rechtzeitig darüber informiert wird, dass ein Einsteigen in das Fahrzeug demnächst notwendig sein wird und das Fahrzeug daher in eine Position zu bringen ist, in welcher zumindest die Fahrertür geöffnet werden kann.

Das vorstehend beschriebene System bietet den Vorteil, dass eine Fernsteuerung eines Fahrzeugs ergonomischer und insbesondere sicherer realisierbar ist und verschiedene Probleme einer Serienzulassung des Systems nicht im Wege stehen sollten. Es versteht sich von selbst, dass manche der vorgenannten Funktionen, beispielsweise Berechnungsschritte, umfassen können, welche in geeigneter Weise entweder durch einen in der Fernsteuerungseinrichtung angeordneten Prozessor und/oder durch eine in dem Fahrzeug angeordnete Informationsverarbeitungseinheit (z.B. elektronisches Steuergerät) berechnet, verarbeitet und anschließend an die Fernsteuerung bzw. das Fahrzeug gesendet werden können. Dasselbe gilt für den Empfang von Signalen zur Ortung des Fahrzeugs und/oder der Fernbedienung sowie für den Empfang von Signalen aus der Infrastruktur, beispielsweise eines Parkhauses.

Weitere Aspekte, wie sie erfindungsgemäß vorgeschlagen werden könnten umfassen eine Begrenzung der maximalen Fahrzeuggeschwindigkeit auf sehr niedrige Geschwindigkeiten (z.B. 0,25 m/s) und/oder kleinste Fahrstufen bzw. den ersten Gang sowie den Rückwärtsgang. Weiter kann in der Fernbedienung eine Art "Totmann-Taster"-Funktion vorgesehen sein, durch welche der Anwender eine Taste gedrückt und/oder wiederholt betätigen muss, um die ferngesteuerte Bewegung des Fahrzeugs zu ermöglichen. Ein solches Totmann-Bedienelement kann in Verbindung mit Bedienelementen innerhalb des Fahrzeugs oder in Verbindung mit dessen Umgebungs-Sensorik (z.B. Verdecken bestimmter PDC-Sensoren durch den Anwender) realisiert werden. Des Weiteren kann zur Identifikation des Anwenders ein Fingerabdruck-Scanner in der Fernbedienung vorgesehen sein, der auch im Rahmen der Totmann-Taster-Funktion verwendet werden kann. Insbesondere kann der Fingerabdruck-Scanner im Gehäuse der Fernbedienung vorgesehen werden. Des Weiteren kann eine maximale Entfernung zwischen der Fernbedienung und dem Fahrzeug festgelegt sein und diese zyklisch (z.B. mittels Differential-GPS) überprüft werden. Bei Überschreiten der maximalen Entfernung wird das Fahrzeug automatisch gestoppt. Selbstverständlich können Umgebungssensoren jeglicher Art zum Einsatz kommen, um im Bedarfsfall Kollisionswarnungen auszugeben oder das Fahrzeug automatisch zu stoppen. Diese können auch außerhalb des Fahrzeugs angeordnet und im Bedarfsfall insbesondere drahtlos (z.B. über Infrarot, Bluetooth oder WLAN) eingebunden werden. Alternativ können auch die Messdaten der extern angebundenen Sensoren an die Fernbedienung und/oder das Fahrzeug gesendet werden. Über die Position der Fernbedienung bzw. ihre dortige Betätigung kann auch eine Zielposition direkt markiert und/oder durch eine Bewegung der Fernbedienung auf eine solche Zielposition gewiesen werden, welche das Fahrzeug anschließend ansteuert.

Gemäß einem weiteren Aspekt der vorliegenden Erfindung wird ein Verfahren zur Absicherung eines Fernsteuervorgangs eines Fahrzeugs zur Verfügung gestellt, dessen Schritte im Wesentlichen der Funktionalität des vorstehend beschriebenen Systems entsprechen. Um Wiederholungen zu vermeiden, wird daher auf die vorstehenden Ausführungen verwiesen.

Die Unteransprüche zeigen bevorzugte Weiterbildungen der Erfindung.

Gemäß einem weiteren Aspekt der vorliegenden Erfindung wird ein Fahrzeug unter Schutz gestellt, welches eine Sende-/Empfangseinrichtung umfasst und eingerichtet ist, mit einer Fernsteuerung Signale auszutauschen und in einem, wie vorstehend beschriebenen, System eingesetzt zu werden.

Gemäß einem weiteren Aspekt der vorliegenden Erfindung wird eine Fernsteuerung zur Steuerung eines Fahrzeugs beim Einparken des Fahrzeugs zur Verfügung gestellt, wobei die Fernsteuerung eine Sende-/ Empfangseinrichtung, eine Eingabeeinheit und bevorzugt auch eine Anzeigeeinheit umfasst und eingerichtet ist, um in einem wie vorstehend beschriebenen System verwendet zu werden.

### Kurzbeschreibung der Zeichnungen

Nachfolgend werden Ausführungsbeispiele der Erfindung unter Bezugnahme auf die begleitenden Zeichnungen im Detail beschrieben. In den Zeichnungen ist:
- Figur 1: eine Übersicht über ein erfindungsgemäßes System;
- Figur 2: eine Detailansicht einer erfindungsgemäßen Fernsteuerung;
- Figur 3: eine systematische Übersicht über logische Einheiten eines Ausführungsbeispiels der vorliegenden Erfindung;
- Figur 4: ein Flussdiagramm mit Schritten, wie sie in einem Ausführungsbeispiel eines Verfahrens der vorliegenden Erfindung durchgeführt werden.

### Ausführungsformen der Erfindung

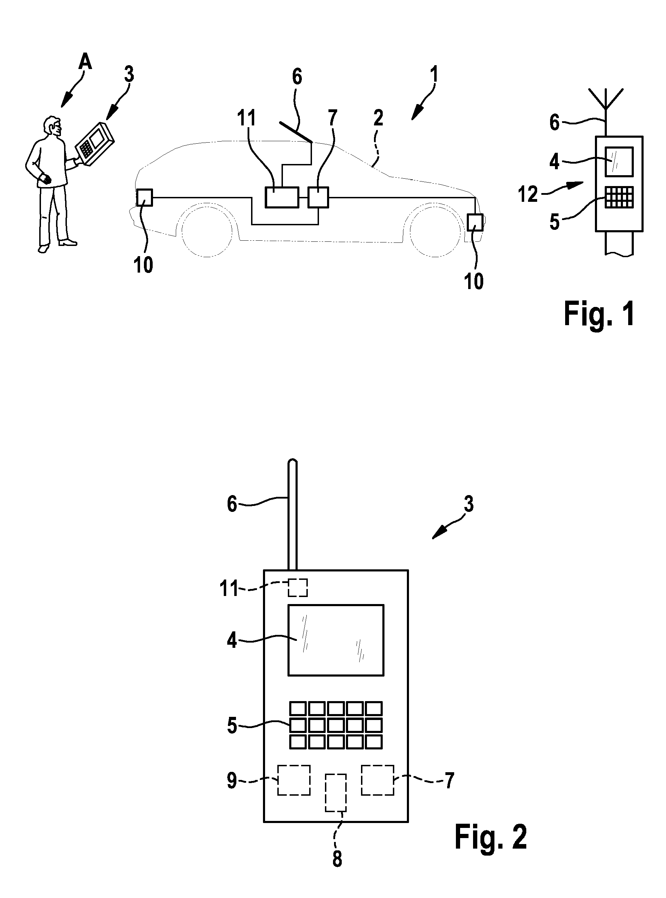

Figur 1 zeigt eine Übersicht eines erfindungsgemäßen Systems, in welche ein Anwender A eine Fernbedienung 3 als Fernbedienungseinrichtung in der Hand hält. Die Fernbedienung 3 ist eingerichtet, mit einer Sende-/Empfangseinheit 11 des Fahrzeugs 2 zu kommunizieren. Für die Auswertung der Steuerbefehle besitzt das Fahrzeug 2 einen Prozessor 7, welcher auch Signale der Umfeldsensoren 10 erhält und verarbeitet. Ein Infrastruktursender 12 mit einer Antenne 6 und einer Anzeige 4 sowie einer Eingabeeinheit 5 ist ortsfest in der Umgebung angeordnet und ebenfalls eingerichtet, zumindest mit dem Fahrzeug 2, bevorzugt jedoch auch mit der Fernbedienung 3 zu kommunizieren.

Figur 2 zeigt eine Fernsteuerung 3, welche eine Antenne 6 und ebenfalls eine Sende-/Empfangseinheit 11 aufweist. Zur Interaktion mit dem Anwender weist die Fernsteuerung 3 weiter eine Anzeige 4 sowie eine Eingabeeinheit 5 auf. Ein Prozessor 7 innerhalb der Fernsteuerung 3 ist mit einem Speicher 8 und mindestens einem Beschleunigungssensor 9 verbunden und darüber hinaus eingerichtet, Signale stammend von der Sende-/Empfangseinheit 11 sowie der Eingabeeinheit 5 zu empfangen. Im Speicher 8 können Befehlssätze und Daten, welche insbesondere in Verbindung mit der Eingabeeinheit 5 durch den Anwender A erstellt worden sind, abgelegt und erneut abgerufen werden. Die Fernsteuerung 3 kann überdies eingerichtet sein, über eine Antenne 6 Satellitenortungssignale zu empfangen und diese mit einer im Speicher 8 abgelegten Karte einer Infrastruktur (z.B. Parkhaus) bzw. einer vom Infrastruktursender 12 empfangenen Informationseinheit abzugleichen.

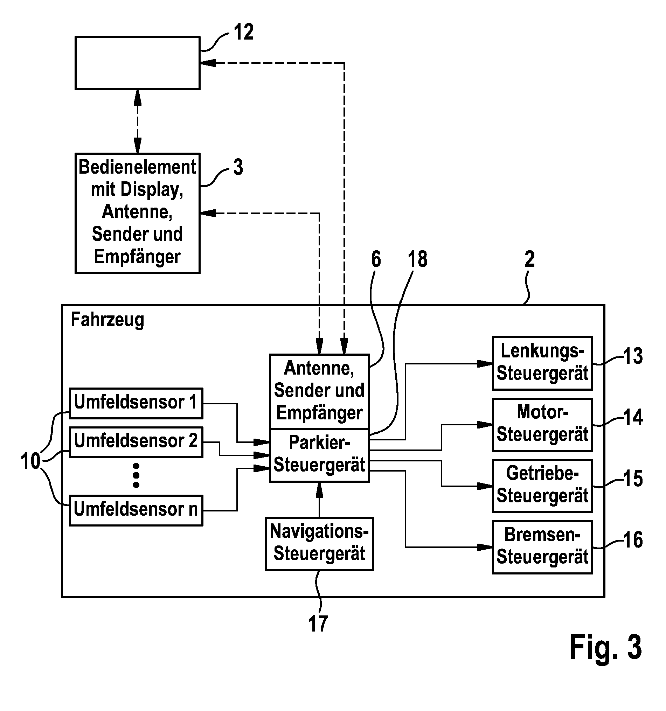

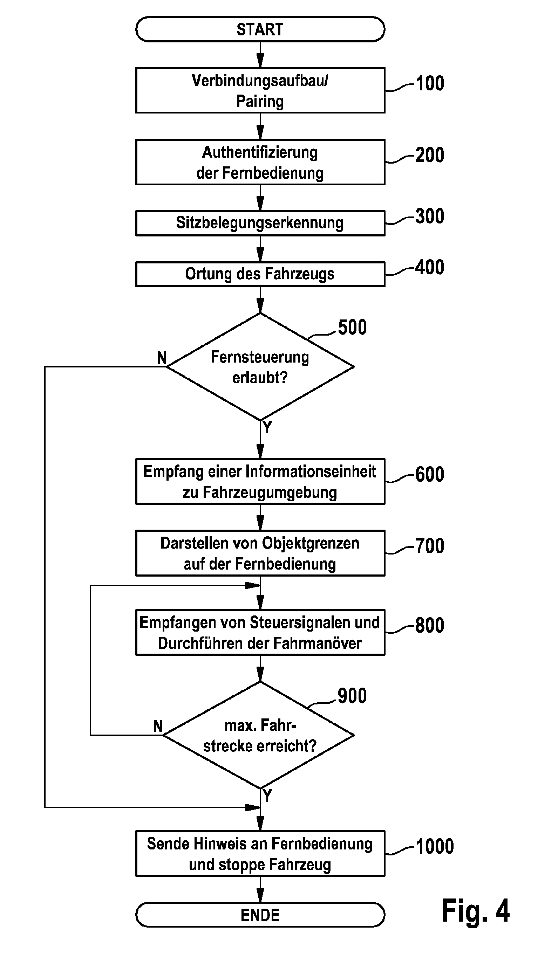

Figur 3 zeigt eine schematische Übersicht logischer Einheiten eines Ausführungsbeispiels eines erfindungsgemäßen Systems, in welchem eine Fernsteuerung 3 mit einem Infrastruktursender 12 drahtlos in Verbindung steht und beide über eine drahtlose Verbindung mit einem Fahrzeug 2 bzw. über dessen Antenne 6 verbunden sind, um mit einem Prozessor 7 des Fahrzeugs 2 zu kommunizieren. Der Prozessor 7 bildet den Kern eines Parkiersteuergerätes 18, welches mit dem Navigationssteuergerät 17, dem Lenkungssteuergerät 13, dem Motorsteuergerät 14, dem Getriebesteuergerät 15 und dem Bremsensteuergerät 16 des Fahrzeugs 2 in Verbindung steht. Desweiteren sind Umfeldsensoren 10 mit dem Prozessor 7 des Parkiersteuergeräts verbunden, welche beispielsweise als Park-Distance-Control-Sensoren auf Ultraschallbasis oder als optische Kamerasysteme ausgestaltet sein können. Sofern die Fernsteuerung 3 durch ein sogenanntes Smartphone dargestellt wird, ist es möglich, dass auch das Smartphone ein Navigationssteuergerät 18 umfasst, dessen Funktionalität ebenfalls in das erfindungsgemäße System 1 eingebunden werden kann. Über die Fernsteuerung 3 kann ein Anwender A für die Bedienung des Fahrzeugs 2 bzw. dessen Steuergeräte beispielsweise mittels PIN (persönliche Identifikationsnummer) authentifiziert werden und eine insbesondere verschlüsselte Verbindung mit dem Fahrzeug aufbauen. Über die Bedienelemente der Fernsteuerung 3 wird dem Anwender somit eine Fernsteuerung des Fahrzeugs 2 ermöglicht, wobei die erfindungsgemäßen Schritte zur Ergonomieverbesserung bzw. Absicherung des erfindungsgemäßen Systems zur Fernsteuerung eines Fahrzeugs anhand des Ablaufdiagramms, welches in Figur 4 dargestellt ist, eingehend beschrieben werden.

Figur 4 zeigt die Schritte des erfindungsgemäßen Verfahrens gemäß einem bevorzugten Ausführungsbeispiel. Das Verfahren wird gestartet, indem der Fahrer beispielsweise nach dem Anfahren einer Startposition für das erfindungsgemäße Verfahren eine Eingabe innerhalb des Fahrzeugs tätigt, woraufhin in Schritt 100 eine Verbindung zwischen Fahrzeug 2 bzw. dessen Sende-/Empfangseinheit 11 mit der Fernsteuerung 3 bzw. deren Sende-/Empfangseinheit 11 aufgebaut wird. Dieser häufig als "pairing" bezeichnete Schritt kann einen Austausch von Schlüsseln zwischen der Fernsteuerung 3 und dem Fahrzeug 2 umfassen, mit welchen die Funkverbindung gegen unbefugte Beteiligung geschützt wird. Zur Erkennung, ob die Verbindung stabil ist, können zyklische Prüfnachrichten zwischen dem Fahrzeug 2 und der Fernsteuerung 3 ausgetauscht werden, deren Ausbleiben das Fahrzeug 2 veranlasst, umgehend jegliche Bewegungen einzustellen, welche nicht durch im Fahrzeuginnenraum angeordnete Bedienelemente vorgenommen bzw. veranlasst werden.

In Schritt 200 erfolgt eine Authentifizierung des Anwenders A als zur Bedienung des Fahrzeugs 2 über die Fernsteuerung 3 Berechtigter, beispielsweise durch Eingabe einer PIN, welche zuvor im Fahrzeug hinterlegt worden ist. Mit anderen Worten übernimmt nun der auch zur Bewegung des Fahrzeugs 2 berechtigte Anwender A die Verantwortung für sämtliche durch die Fernbedienung 3 an das Fahrzeug 2 gesendete Steuerbefehle.

In Schritt 300 wird eine Sitzbelegungserkennung innerhalb des Fahrzeugs durchgeführt, und somit sichergestellt, dass vor dem Entgegennehmen und Umsetzen von Fernsteuerungsbefehlen alle Insassen das Fahrzeug 2 verlassen haben.

In Schritt 400 wird eine Ortung des Fahrzeugs, beispielsweise über GPS oder andere satellitenbasierte Navigationssysteme durchgeführt und die aktuelle Position des Fahrzeugs 2 mit einem Datensatz abgeglichen, in welchem Ortsbereiche, in welchen eine Fernsteuerung des Fahrzeugs 2 erlaubt ist, hinterlegt sind. Aufgrund der in Schritt 300 erfolgten Sitzbelegungserkennung und der in Schritt 400 überprüften aktuellen Position des Fahrzeugs 2 wird in Schritt 500 entschieden, ob eine Fernsteuerung des Fahrzeugs aktuell freigeschaltet werden kann. Ist dies nicht der Fall, sendet in Schritt 1000 N das Fahrzeug einen entsprechenden Hinweis an die Fernbedienung 3 und informiert somit den Anwender A darüber, dass das Fahrzeug 2 nun gestoppt wird. Dieser Hinweis kann auch eine Mitteilung des Grundes umfassen, aus welchem eine Fernsteuerung des Fahrzeugs 2 nicht erlaubt wird. In jedem Fall wird das Fahrzeug 2 im Zuge dessen gestoppt und der Fahrer A aufgefordert, in das Fahrzeug einzusteigen. Sofern in Schritt 500 die Fernsteuerung des Fahrzeugs 2 erlaubt wird Y, wird in Schritt 600 eine Informationseinheit eines Infrastruktursenders 12 empfangen, in welcher ein Umgebungsmodell beispielsweise in Form eines digitalisierten Abbildes der Fahrzeugumgebung (kollisionsrelevante Abbildung eines Parkhauses) empfangen wird.

In Schritt 700 werden dem Anwender A Objektgrenzinformationen des Fahrzeugs 2 sowie relevanter Strukturen der Fahrzeugumgebung auf der Fernbedienung 3 dargestellt und zur Bestätigung der dargestellten Objektgrenzinformationen aufgefordert. Die dargestellten Objektgrenzinformationen können beispielsweise als hervorgehobene Linien in einem Kamerabild der Fahrzeugsituation hervorgehoben werden, welche der Anwender A auf einem sogenannten "Touch-Screen" definieren, gegebenenfalls verschieben und anschließend bestätigen kann. Zusätzlich kann ein Plausibilisierungsschritt durch das erfindungsgemäße System durchgeführt werden, und der Anwender A gegebenenfalls zu einem zweiten Bestätigungsschritt aufgefordert werden, wenn das erfindungsgemäße System ermittelt, dass die vom Anwender A festgelegten Objektgrenzinformationen zu optimistisch bzw. zu pessimistisch gewählt sind. Anschließend kann der Anwender A in Schritt 800 Steuersignale über die Fernsteuerung 3 an das Fahrzeug 2 senden und Parameter wie Gas, Bremse und Lenkung durch geeignete Eingabeeinrichtungen an das Fahrzeug 2 senden. Im Ansprechen auf die Signale führt das Fahrzeug 2 entsprechende Manöver aus, während der Anwender A außerhalb des Fahrzeugs 2 sich die für ihn beste Übersicht über die Situation des Fahrzeugs 2 in seiner Umgebung verschaffen kann. Im Schritt 900 wird überprüft, ob eine vordefinierte maximale Fahrstrecke des Fahrzeugs unter Einfluss der Fernsteuerung 3 durch das Fahrzeug 2 zurückgelegt worden ist. Ist dies nicht der Fall N, verfährt das Verfahren durch Empfangen und Ausführen von Steuersignalen in Schritt 800 fort. Ist dies der Fall Y, wird in Schritt 1000 ein Hinweis an die Fernbedienung 3 gesendet und das Fahrzeug 2 gestoppt. Der Hinweis kann beispielsweise als Pop-up oder als akustisches Signal, gegebenenfalls begleitet durch einen Vibrationsimpuls der Fernsteuerung 3, dargestellt werden. Anschließend endet das erfindungsgemäße Verfahren.

Auch wenn die vorliegende Erfindung in ihren Aspekten und Merkmalen anhand der obigen Ausführungen im Detail beschrieben worden ist, sind für den Fachmann Kombinationen der dargestellten Merkmale und Mechanismen auch aspektübergreifend möglich, ohne dass sie den Bereich der vorliegenden Erfindung verlassen, deren Schutzumfang durch die beigefügten Ansprüche definiert ist.

## Patentansprüche

1. System zur Fernsteuerung eines Fahrzeugs (2), umfassend ein Fahrzeug (2) und eine Fernsteuerungseinrichtung (3), wobei das Fahrzeug (2) eine Sendeempfangseinrichtung (11) umfasst, welche eingerichtet ist, mit der Fernsteuerungseinrichtung (3) Signale auszutauschen, und wobei das System (1) eingerichtet ist, zu überprüfen, ob eine aktuelle Position des Fahrzeugs (2) in einem vordefinierten Aufenthaltsbereich für das Fahrzeug (2) liegt und im Ansprechen auf das Ergebnis eine Fernsteuerung des Fahrzeugs (2) zu ermöglichen und/oder zu unterbinden,
**dadurch gekennzeichnet dass** eine Ausgabe eines Hinweises an einen Anwender (A) erfolgt, insbesondere durch die Fernsteuerungseinrichtung (3), wenn das Fahrzeug (2) eine vordefinierte Weglänge zurückgelegt hat, wobei das System außerdem optional eine der folgenden Funktionen implementiert:
a. Sitzbelegungsinformationen des Fahrzeugs (2) zu prüfen und im Ansprechen auf die Informationen eine Fernsteuerung des Fahrzeugs (2) zu ermöglichen und/oder zu unterbinden,
b. Signale stammend von Beschleunigungssensoren (9) und/oder Lagesensoren der Fernsteuerungseinrichtung (3) auszuwerten und Fahrzeugbewegungen entsprechend der Signale zu steuern,
c. Objektgrenzinformationen mittels einer graphischen Darstellung, insbesondere durch eine Fernsteuerungseinrichtung (3), einer Fahrzeugsituation hervorzuheben und entgegenzunehmen,
d. eine Informationseinheit bezüglich kollisionsrelevanter Strukturen einer, insbesondere aktuellen, Fahrzeugumgebung, insbesondere durch eine Infrastruktureinrichtung, zu empfangen,
e. zum automatischen Stoppen eines Fernsteuervorgangs, nachdem das Fahrzeug eine vordefinierte Weglänge ferngesteuert zurückgelegt hat.

2. Verfahren zur Absicherung eines Fernsteuervorgangs eines Fahrzeugs (2), umfassend die Schritte:
- Überprüfen einer aktuellen Position des Fahrzeugs (2) hinsichtlich eines vordefinierten Aufenthaltsbereiches des Fahrzeugs (2) und im Ansprechen auf das Ergebnis eine Fernsteuerungseinrichtung (3) des Fahrzeugs (2) zu ermöglichen und/oder zu unterbinden,
**dadurch gekennzeichnet, dass** eine Ausgabe eines Hinweises an einen Anwender (A) erfolgt, insbesondere durch die Fernsteuerungseinrichtung (3), wenn das Fahrzeug (2) eine vordefinierte Weglänge zurückgelegt hat, sowie optional einen der folgenden Schritte:
a. Prüfen von Sitzbelegungsinformationen des Fahrzeugs (2) und im Ansprechen auf die Informationen eine Fernsteuerung des Fahrzeugs (2) zu ermöglichen und/oder zu unterbinden,
b. Auswerten von Beschleunigungssensoren (9) Lagesensoren einer Fernsteuerungseinrichtung (3) auszuwerten und Fahrzeugbewegungen entsprechend der Signale zu steuern,
c. Definieren und/oder Bestätigen von Objektgrenzinformationen in einer Darstellung, insbesondere durch eine Fernsteuerungseinrichtung (3), einer Fahrzeugsituation, insbesondere im Ansprechen auf Eingaben eines Anwender (A),
d. Empfangen einer Informationseinheit bezüglich kollisionsrelevanter Strukturen einer, insbesondere aktuellen, Fahrzeugumgebung, insbesondere durch eine Infrastruktureinrichtung,
e. automatisches Stoppen eines Fernsteuervorgangs nachdem das Fahrzeug eine vordefinierte Weglänge ferngesteuert zurückgelegt hat.

3. Fahrzeug umfassend eine Sendeempfangseinrichtung (11), welche eingerichtet ist, mit einer Fernsteuerungseinrichtung (3) Signale auszutauschen, wobei das Fahrzeug (2) eingerichtet ist, in einem System (1) nach Anspruch 1 eingesetzt zu werden.

4. Fernsteuerungseinrichtung zur Steuerung eines Fahrzeugs (2) beim Einparken eines Fahrzeugs (2), wobei die Fernsteuerungseinrichtung (3) eingerichtet ist, in einem System (1) nach Anspruch 1 verwendet zu werden.

5. System nach Anspruch 1, Verfahren nach Anspruch 2, Fahrzeug nach Anspruch 3 oder Fernsteuerungseinrichtung (3) nach Anspruch 4, wobei die Fernsteuerungseinrichtung (3) eingerichtet ist, eine Datenverbindung per Infrarot, Bluetooth, WLAN und/oder GSM und/oder UMTS und/oder LTE und/oder LTE-A und/oder digitaler Satellitentelefonie einzugehen.

6. System nach Anspruch 5, Verfahren nach Anspruch 5, Fahrzeug nach Anspruch 5 oder Fernsteuerungseinrichtung (3) nach Anspruch 5, wobei die Datenverbindung eingerichtet ist, Signale repräsentierend Lenkeinschlag und/oder Gas und/oder Bremse und/oder Hupe und/oder Licht und/oder, insbesondere von Sensoren des Fahrzeug aufgenommene, Umgebungsdaten zu übermitteln.

7. System nach einem der Ansprüche 1, 5 oder 6, Verfahren nach einem der Ansprüche 2, 5 oder 6, Fahrzeug nach einem der Ansprüche 3, 5 oder 6 oder Fernsteuerungseinrichtung (3) nach einem der Ansprüche 4, 5 oder 6, wobei das Fahrzeug (2) ein Personenkraftwagen für den Straßenverkehr ist.

8. System nach einem der Ansprüche 1, 5, 6 oder 7, Verfahren nach einem der Ansprüche 2, 5, 6 oder 7, Fahrzeug nach einem der Ansprüche 3, 5, 6 oder 7 oder Fernsteuerungseinrichtung (3) nach einem der Ansprüche 4, bis 7, wobei die Fernsteuerungseinrichtung (3) ein Mobiltelefon oder ein persönlicher digitaler Assistent ist.

9. System nach einem der Ansprüche 1 oder 5 bis 8, Verfahren nach einem der Ansprüche 2 oder 5 bis 8, Fahrzeug nach einem der Ansprüche 3 oder 5 bis 8 oder Fernsteuerungseinrichtung (3) nach einem der Ansprüche 4 bis 8, wobei die Fernsteuerung des Fahrzeugs (2) in Abhängigkeit eines Auswerteergebnisses eines Totmann-Bedienelements in der Fernsteuerungseinrichtung (3) und/oder im und/oder am Fahrzeug (2) ermöglicht und/oder unterbunden wird.

## Claims

1. System for performing remote control of a vehicle (2), comprising a vehicle (2) and a remote control device (3), wherein the vehicle (2) comprises a transceiver device (11) which is configured to exchange signals with the remote control device (3), and wherein the system (1) is configured to check whether a current position of the vehicle (2) is in a predefined location region for the vehicle (2) and to permit and/or prohibit remote control of the vehicle (2) in response to the result,
**characterized in that** an instruction is output to a user (A), in particular by means of the remote control device (3), if the vehicle (2) has travelled for a predefined distance, wherein the system also optionally implements one of the following functions:
a. checking seat occupation information of the vehicle (2), and enabling and/or prohibiting remote control of the vehicle (2) in response to the information,
b. evaluating signals originating from acceleration sensors (9) and/or position sensors of the remote control device (3) and controlling vehicle movements in accordance with the signals,
c. emphasizing object boundary information by means of a graphic representation, in particular by a remote control device (3), of a vehicle situation, and receiving said information,
d. receiving an information unit relating to collision-relevant structures of an, in particular current, vehicle environment, in particular by means of an infrastructure device, and
e. automatically stopping a remote control process after the vehicle has travelled for a predefined distance under remote control.

2. Method for safeguarding a remote control process of a vehicle (2), comprising the steps:
- checking a current position of the vehicle (2) with respect to a predefined location region of the vehicle (2), and enabling and/or prohibiting a remote control device (3) of the vehicle (2) in response to the result,
**characterized in that** an instruction is output to a user (A), in particular by means of the remote control device (3), if the vehicle (2) has travelled for a predefined distance, as well as optionally one of the following steps:
a. checking seat occupation information of the vehicle (2), and enabling and/or prohibiting remote control of the vehicle (2) in response to the information,
b. evaluating acceleration sensors (9) to evaluate position sensors of a remote control device (3) and controlling vehicle movements in accordance with the signals,
c. defining and/or confirming object boundary information in a representation, in particular by a remote control device (3), of a vehicle situation, in particular in response to inputs by a user (A),
d. receiving an information unit relating to collision-relevant structures of an, in particular current, vehicle environment, in particular by means of an infrastructure device, and
e. automatically stopping a remote control process after the vehicle has travelled for a predefined distance under remote control.

3. Vehicle comprising a transceiver device (11) which is configured to exchange signals with a remote control device (3), wherein the vehicle (2) is configured to be used in a system (1) according to Claim 1.

4. Remote control device for controlling a vehicle (2) when parking a vehicle (2), wherein the remote control device (3) is configured to be used in a system (1) according to Claim 1.

5. System according to Claim 1, method according to Claim 2, vehicle according to Claim 3 or remote control device (3) according to Claim 4, wherein the remote control device (3) is configured to enter into a data connection by infrared, Bluetooth, WLAN and/or GSM and/or UMTS and/or LTE and/or LTE-A and/or digital satellite telephony.

6. System according to Claim 5, method according to Claim 5, vehicle according to Claim 5 or remote control device (3) according to Claim 5, wherein the data connection is configured to transmit signals representing the steering lock and/or degree of opening of the throttle and/or brake and/or horn and/or light and/or ambient data picked up, in particular, by sensors of the vehicle.

7. System according to one of Claims 1, 5 or 6, method according to one of Claims 2, 5 or 6, vehicle according to one of Claims 3, 5 or 6 or remote control device (3) according to one of Claims 4, 5 or 6, wherein the vehicle (2) is a passenger car for road traffic.

8. System according to one of Claims 1, 5, 6 or 7, method according to one of Claims 2, 5, 6 or 7, vehicle according to one of Claims 3, 5, 6 or 7 or remote control device (3) according to one of Claims 4 to 7, wherein the remote control device (3) is a mobile phone or a personal digital assistant.

9. System according to one of Claims 1 or 5 to 8, method according to one of Claims 2 or 5 to 8, vehicle according to one of Claims 3 or 5 to 8 or remote control device (3) according to one of Claims 4 to 8, wherein the remote control of the vehicle (2) is enabled and/or prohibited as a function of an evaluation result of a Deadman's handle operator control element in the remote control device (3) and/or in and/or on the vehicle (2).

## Revendications

1. Système de commande à distance d'un véhicule (2), comprenant un véhicule (2) et un dispositif de commande à distance (3), dans lequel le véhicule (2) comprend un dispositif d'émission/réception (11), qui est conçu afin d'échanger des signaux avec un dispositif de commande à distance (3), et dans lequel le système (1) est conçu afin de contrôler si une position actuelle du véhicule (2) est située dans une zone de stationnement prédéfinie pour le véhicule (2) et de permettre et/ou empêcher une commande à distance du véhicule (2) en réponse au résultat, **caractérisé en ce qu'**une émission d'une indication à un utilisateur (A) a lieu, notamment par l'intermédiaire du dispositif de commande à distance (3), lorsque le véhicule (2) a parcouru une longueur de trajet prédéfinie, dans lequel le système implémente en outre et en option l'une des fonctions suivantes :
a. contrôler des informations d'occupation de siège du véhicule (2) et permettre et/ou empêcher en réponse aux informations une commande à distance du véhicule (2),
b. évaluer des signaux provenant de capteurs d'accélération (9) et/ou de capteurs de position du dispositif de commande à distance (3) et commander les mouvements du véhicule de manière correspondante aux signaux ;
c. mettre en relief et accepter des informations de limites d'objet au moyen d'une représentation graphique, notamment par un dispositif de commande à distance (3), d'une situation de véhicule,
d. recevoir une unité d'information relative aux structures significatives en cas de collision, d'un environnement du véhicule, notamment actuel, notamment par l'intermédiaire d'un dispositif d'infrastructure,
e. arrêter automatiquement une procédure de commande à distance, après que le véhicule a parcouru une longueur de trajet prédéfinie en étant commandé à distance.

2. Procédé de sécurisation d'une procédure de commande à distance d'un véhicule (2), comprenant les étapes consistant à :
- contrôler une position actuelle du véhicule (2) concernant une zone de stationnement prédéfinie du véhicule (2) et en réponse au résultat permettre et/ou empêcher un dispositif de commande à distance (3) du véhicule (2),
**caractérisé en ce qu'**une émission d'une indication à un utilisateur (A) a lieu, notamment par l'intermédiaire du dispositif de commande à distance (3), lorsque le véhicule (2) a parcouru une longueur de trajet prédéfinie, ainsi qu'en option une des étapes suivantes :
a. contrôler des informations d'occupation de siège du véhicule (2) et permettre et/ou empêcher en réponse aux informations une commande à distance du véhicule (2),
b. évaluer des capteurs d'accélération (9) pour évaluer capteurs de position d'un dispositif de commande à distance (3) et commander les mouvements du véhicule de manière correspondante aux signaux,
c. définir et/ou confirmer des informations de limites d'objet dans une représentation, notamment par l'intermédiaire d'un dispositif de commande à distance (3), d'une situation de véhicule, notamment en réponse aux entrées d'un utilisateur (A),
d. recevoir une unité d'information relative aux structures significatives en cas de collision d'un environnement du véhicule, notamment actuel, notamment par l'intermédiaire d'un dispositif d'infrastructure,
e. arrêter automatiquement une procédure de commande à distance, après que le véhicule a parcouru une longueur de trajet prédéfinie en étant commandé à distance.

3. Véhicule comprenant un dispositif d'émission/réception (11), qui est conçu afin d'échanger des signaux avec un dispositif de commande à distance (3), dans lequel le véhicule (2) est conçu afin d'être employé dans un système (1) selon la revendication 1.

4. Dispositif de commande à distance pour commander un véhicule (2) lors du stationnement d'un véhicule (2), dans lequel le dispositif de commande à distance (3) est conçu afin d'être utilisé dans un système (1) selon la revendication 1.

5. Système selon la revendication 1, procédé selon la revendication 2, véhicule selon la revendication 3 ou dispositif de commande à distance (3) selon la revendication 4, le dispositif de commande à distance (3) étant conçu afin d'établir une liaison de données par infrarouge, Bluetooth, WLAN et/ou GSM et/ou UMTS et/ou LTE et/ou LTE-A et/ou téléphonie satellite numérique.

6. Système selon la revendication 5, procédé selon la revendication 5, véhicule selon la revendication 5 ou dispositif de commande à distance (3) selon la revendication 5, dans lequel la liaison de données est conçue afin de transmettre des signaux représentant le braquage et/ou les gaz et/ou les freins et/ou le klaxon et/ou la lumière et/ou, notamment des données d'environnement enregistrées par des capteurs du véhicule.

7. Système selon une des revendications 1,5 ou 6, procédé selon une des revendications 2,5 ou 6, véhicule selon une des revendications 3,5 ou 6 ou dispositif de commande à distance (3) selon une des revendications 4,5 ou 6, le véhicule (2) étant un véhicule particulier pour la circulation routière.

8. Système selon une des revendications 1,5,6 ou 7, procédé selon une des revendications 2,5,6 ou 7, véhicule selon une des revendications 3,5,6 ou 7 ou dispositif de commande à distance (3) selon une des revendications 4 à 7, le dispositif de commande à distance (3) étant un téléphone mobile ou un assistant numérique personnel.

9. Système selon une des revendications 1 ou 5 à 8, procédé selon une des revendications 2 ou 5 à 8, véhicule selon une des revendications 3 ou 5 à 8 ou dispositif de commande à distance (3) selon une des revendications 4 à 8, la commande à distance du véhicule (2) étant permise et/ou empêchée en fonction d'un résultat d'évaluation d'un élément de manoeuvre d'homme mort dans le dispositif de commande à distance (3) et/ou dans et/ou sur le véhicule (2).
